# FASCICULE DE BREVET EUROPEEN

(11) **EP 2 313 958 B1**
(45) Date de publication et mention de la délivrance du brevet: **18.12.2013**
(21) Numéro de dépôt: 09777487.1
(22) Date de dépôt: 28.07.2009
(51) Int. Cl.: H02K 1/27, H02K 1/17

(54) **ROTOR INTERIEUR POUR MACHINE ELECTRIQUE TOURNANTE A CALES D'AIMANTS EN FORME DE <<T>>**
INTERNER ROTOR FÜR EINE ELEKTRISCHE DREHMASCHINE MIT T-FÖRMIGEN MAGNETISCHEN KEILEN
INTERNAL ROTOR FOR A ROTARY ELECTRIC MACHINE WITH T-SHAPED MAGNET WEDGES

(30) Priorité: 20.08.2008 FR 0855634
(43) Date de publication de la demande: 27.04.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: VEDY, Bertrand, CH-1814 La Tour de Peilz (CH); BLANC, Claude, CH-1694 Villarsiviriaux (CH)
(74) Mandataire: Lasson, Cédric Y. M.
(86) Numéro de dépôt international: PCT/EP2009/005456
(87) Numéro de publication internationale: WO 2010/020335

(56) Documents cités:
- EP-A- 0 866 540
- EP-A- 1 359 657
- DE-A1- 19 737 391
- FR-A- 1 317 744

## Description

L'invention se rapporte aux machines électriques tournantes dont le rotor comporte des aimants permanents. Plus précisément, l'invention concerne les machines dans lesquelles les aimants sont disposés dans des évidements du rotor. On désigne communément les machines électriques dont il s'agit par l'expression « à aimants enterrés ». Ce principe d'agencement du rotor est largement appliqué pour les machines synchrones autopilotées à concentration de flux.

Le dimensionnement d'une machine électrique tournante dépend de son couple nominal. Plus le couple qu'un moteur est capable de délivrer est élevé, plus le moteur électrique est volumineux, toutes autres choses égales par ailleurs. Il existe pourtant des applications pour lesquelles il est désirable d'atteindre à la fois des puissances importantes et une grande compacité du moteur. Pour donner simplement un exemple concret, lorsque l'on souhaite implanter des moteurs électriques de traction dans les roues de véhicules automobiles, il est souhaitable de pouvoir développer des puissances valant au moins 10 kW par moteur, et même la plupart du temps au moins 25 ou 30 kW par moteur, pour un poids le plus faible possible afin de limiter tant que faire se peut les masses non suspendues. Il est également désirable que l'encombrement soit aussi très réduit, dépassant le moins possible le volume intérieur de la roue pour ne pas interférer avec les éléments du véhicule lors des débattements de suspension et lors d'autres types de mouvement de la roue par rapport à la caisse du véhicule.

Ces deux impératifs (puissance élevée, encombrement et masses faibles) rendent très problématique l'implantation de moteurs électriques de traction dans les roues de véhicules de tourisme, sauf à améliorer radicalement le rapport poids/puissance des machines électriques actuellement disponibles sur le marché.

Le choix d'une vitesse élevée pour un moteur électrique lors de la conception du moteur est une solution permettant, à puissance donnée, de diminuer le couple, donc l'encombrement. Autrement dit, pour une puissance nominale donnée du moteur, plus grande est sa vitesse de rotation nominale, plus faible sera son encombrement.

L'élévation de la vitesse de rotation d'une machine électrique tournante pose en revanche de nombreux problèmes, notamment en ce qui concerne les efforts de centrifugation subits par les éléments du rotor, en particulier les aimants.

Les vibrations (mécaniques et acoustiques) représentent également une difficulté croissante au fur et à mesure que l'on augmente la vitesse de rotation.

Une conception spécifique pour atteindre de grandes vitesses de rotation a déjà été proposée dans la demande de brevet EP 1001507. Les vitesses visées dans cette demande de brevet sont de l'ordre de 12000 t/min, en proposant pour cela un agencement particulier de l'ensemble constitué par un arbre monobloc polygonal et des pièces polaires judicieusement disposées autour de cet arbre.

Un perfectionnement permettant de viser des vitesses de l'ordre à 20000 t/min a été proposée dans la demande de brevet EP 1359657, en proposant pour cela un agencement utilisant des cales pour bloquer radialement les aimants dans leurs logements. Le document EP 0866540 propose également des cales similaires.

Un objectif de l'invention est de proposer un rotor amélioré, notamment en ce qui concerne sa résistance aux efforts de centrifugation et donc sa stabilité dimensionnelle.

L'invention concerne ainsi un rotor intérieur à aimant enterrés pour machine électrique tournante, le rotor comprenant :
- un arbre,
- une pluralité de pièces polaires, réalisées en matière magnétique et entourant l'arbre, les pièces polaires délimitant entre elles des logements,
- une pluralité d'aimants permanents disposés dans les logements,
- un flasque latéral axialement de chaque côté des pièces polaires le long de l'arbre, l'arbre traversant chaque flasque latéral,
- dans lequel les logements sont fermés radialement par des cales coopérant avec des rainures longitudinales des pièce polaires, ledit rotor étant caractérisé en ce que les cales ont un profil en « T », les faces d'appui radial des cales dans les pièces polaires étant perpendiculaires au rayon central des logements, et en ce que, les cales se prolongeant axialement au-delà des pièces polaires, leurs extrémités sont affinées et rabattues dans une gorge périphérique de chaque flasque latéral.

De préférence, les cales sont sensiblement affleurantes à la surface du rotor.

De préférence encore, la surface radialement extérieure des cales est bombée afin de prolonger la courbure radialement extérieure de la surface des pièces polaires.

De préférence encore, les extrémités des cales sont en contact avec les parois extérieures des gorges périphériques de chaque flasque latéral.

De préférence encore, les parois extérieures (521) des gorges périphériques (52) de chaque flasque latéral (5, 5') sont inclinées par rapport à la direction axiale d'un angle sensiblement inférieur à 90°.

L'invention concerne également une machine électrique tournante comprenant un tel rotor.

L'invention sera mieux comprise grâce à la suite de la description, qui s'appuie sur les figures suivantes :
- la figure 1 est une vue en coupe le long de l'axe d'un rotor selon l'invention suivant une ligne brisée A-A visible aux figures 2 et 3.
- la figure 2 est une vue partielle en coupe perpendiculaire à l'axe du rotor de la figure 1 suivant une ligne B-B visible à la figure 1.
- la figure 3 est une vue en coupe perpendiculaire à l'axe du rotor de la figure 1 suivant une ligne C-C visible à la figure 1.
- La figure 4 est une vue en perspective de l'arbre 2.
- La figure 5a est une vue en perspective d'une coupe le long de l'axe du rotor du détail de réalisation des flasques et des cales d'aimants.
- La figure 5b est une vue de détail en coupe le long de l'axe du rotor de l'extrémité rabattue d'un cale d'aimant dans la gorge périphérique d'un flasque latéral.
- la figure 6 est une vue similaire à la figure 1 d'un second mode de réalisation du rotor selon l'invention.
- La figure 7 est une vue à très grande échelle et en perspective montrant une tôle de pièce polaire et un premier mode de réalisation de la cale d'aimant selon l'invention.
- Les figures 8 à 10 sont des vues similaires à la figure 7 montrant d'autres modes de réalisation de cales selon l'invention.

Aux figures annexées, on a représenté un rotor 1 pour une machine hexa-polaire comportant par ailleurs un stator non représenté. Le rotor 1 comprend un arbre monobloc 2 reposant sur des paliers 20. On voit six pièces polaires 30, de préférence formées par un empilage de tôles ferro-magnétiques 3. Chaque tôle 3 est sensiblement perpendiculaire à l'axe de l'arbre. Les tôles peuvent avoir une épaisseur très faible, par exemple de l'ordre de quelques dixièmes de millimètre, par exemple 0.2 mm. Notons simplement au passage que l'invention est aussi utile dans le cas de pièces polaires massives (non feuilletées).

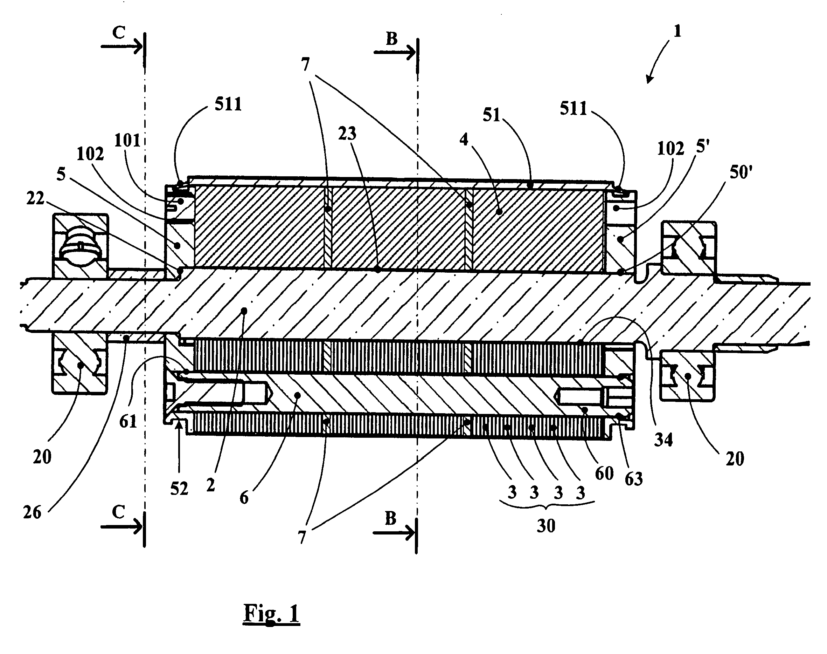

Axialement de part et d'autre de l'arbre 2, on voit un flasque latéral 5, 5' (de préférence en matériau amagnétique), situé de chaque côté des pièces polaires 30. A la figure 1, on voit également deux flasques intermédiaires 7 optionnels (de préférence également en matériau amagnétique). Chaque flasque latéral et le cas échéant chaque flasque intermédiaire 7 comporte une ouverture centrale. Dans l'exemple non limitatif décrit à la figure 1, la forme de l'ouverture centrale des flasques latéraux est circulaire alors que celle de l'ouverture centrale des flasques intermédiaires est ajustée à celle de l'arbre 2, c'est à dire ici rainurée.

Pour chacune des pièces polaires 30, un tirant 6 traverse l'empilage de tôles 3, le cas échéant le ou les flasques intermédiaires, et permet d'enserrer le tout entre les flasques latéraux 5 et 5'. Les efforts centrifuges subits par les pièces polaires sont donc repris par les flasques latéraux et le cas échéant par les flasques intermédiaires à l'exclusion de tout autre moyen.

L'arbre 2 comporte en outre ici un épaulement intérieur 22 destiné à coopérer avec un premier flasque latéral 5 pour déterminer sa position axiale et donc la position axiale des pièces polaires sur l'arbre (voir en particulier les figures 1, 4, 5a et 6). L'épaulement 22 de l'arbre prend de préférence appui au fond d'un lamage 50 du flasque. Une bague extérieure 26 solidarisée à l'arbre par exemple par frettage radial vient immobiliser le flasque en le pressant axialement contre l'épaulement de l'arbre. Le deuxième flasque, que l'on peut qualifier de « flottant » ne vient alors pas s'appuyer sur un épaulement de l'arbre, il reste au contraire libre de se déplacer axialement au gré des dilatations thermiques de l'empilage. Ce flasque flottant peut comporter un lamage sensiblement identique à celui du flasque bloqué ou être au contraire alésé sur toute son épaisseur comme représenté ici (voir alésage 50' du deuxième flasque).

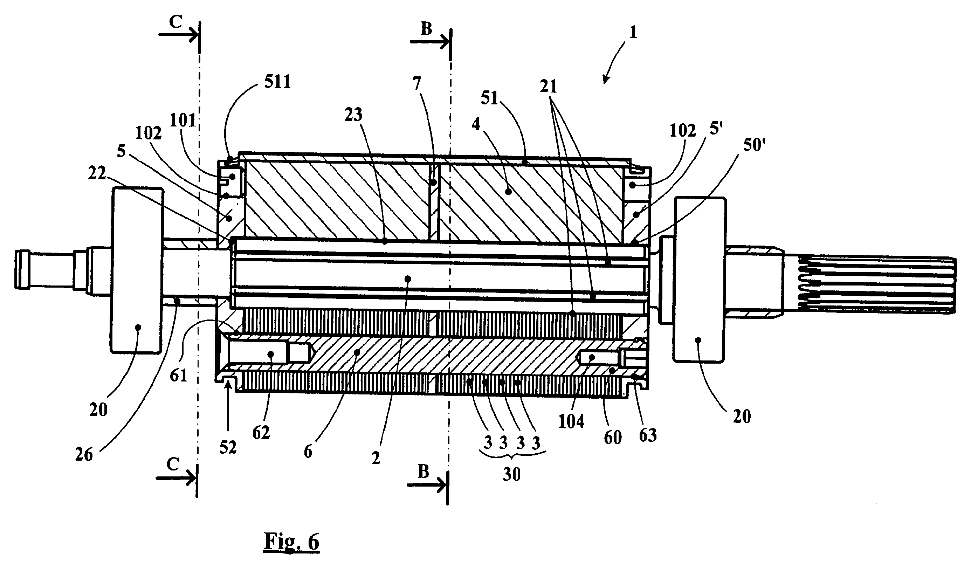

On voit des aimants permanents parallélépipédiques 4 disposés dans les logements 40 entre les pièces polaires 30. Les logements sont interrompus par le ou les flasques intermédiaires 7. Dans l'exemple de la figure 1, il y a donc 3 aimants par pôle alors que dans l'exemple de la figure 6, il n'y a que 2 aimants par pôle. Chacun des logements des aimants est fermé par une cale d'aimant 51.

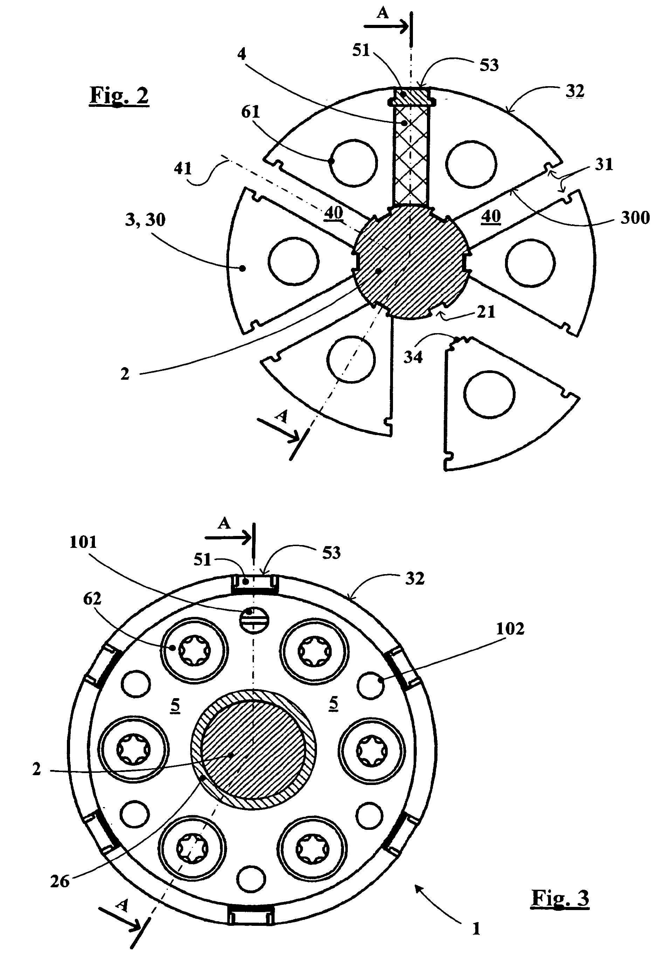

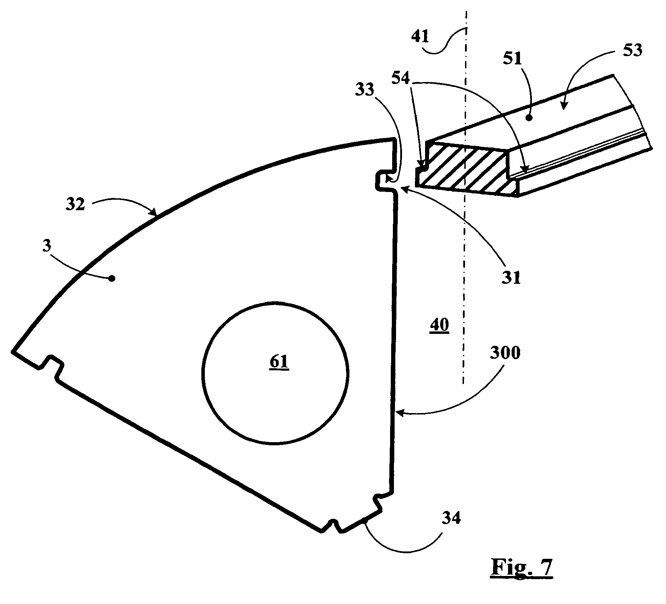

Par ailleurs, comme visible à la figure 2 ou à la figure 7, les faces longitudinales 300 des pièces polaires 30 comportent chacune une rainure 31 parallèle à l'axe du rotor, creusée à un niveau radial proche du bord extérieur 32 de chaque pièce polaire 30 (et donc de chaque tôle 3), lesdites pièces polaires présentant par ailleurs une hauteur (ou plus exactement une dimension radiale) légèrement supérieure à la hauteur des aimants 4. Chaque cale 51 prend ainsi appui sur deux rainures 31 disposées sur chacune des pièces polaires adjacentes. Les aimants 4 sont ainsi rendus mécaniquement solidaires des pièces polaires 30. La fonction essentielle de chaque rainure 31 est de former un épaulement pour s'opposer à la centrifugation des cales et des aimants. Les pièces polaires sont elles-mêmes solidaires entre elles grâce aux tirants et aux flasques latéraux et éventuellement intermédiaire(s).

Selon l'invention, les cales 51 sont en forme de « T ». Le « T » est renversé si l'on regarde une cale placée en haut du rotor (figures 2 et 7 à 10). Les ailes du « T » et les rainures 31 ont des surfaces d'appui radial (respectivement 54 et 33) plates, c'est à dire perpendiculaires au rayon central 41 du logement 40. Ceci est particulièrement bien visible à la figure 7. Ce profil des cales 51 et des rainures 31 permet d'une part au rotor de résister à la centrifugation sans générer à cette occasion d'effort tendant à élargir les logements 40.

La partie radiale (le pied) du « T » comble d'autre part l'espace entre les pièces polaires ce qui donne au rotor une surface extérieure pratiquement lisse (même en l'absence de rectification) car la surface radialement extérieure 53 de la cale affleure avec la surface extérieur 32 des pièces polaires.

Comme visible à la figure 7, les coins des rainures 31 et les arrêtes des cales 51 sont de préférence arrondis, par exemple selon un rayon d'environ 0.5 mm, afin de limiter les concentrations de contraintes.

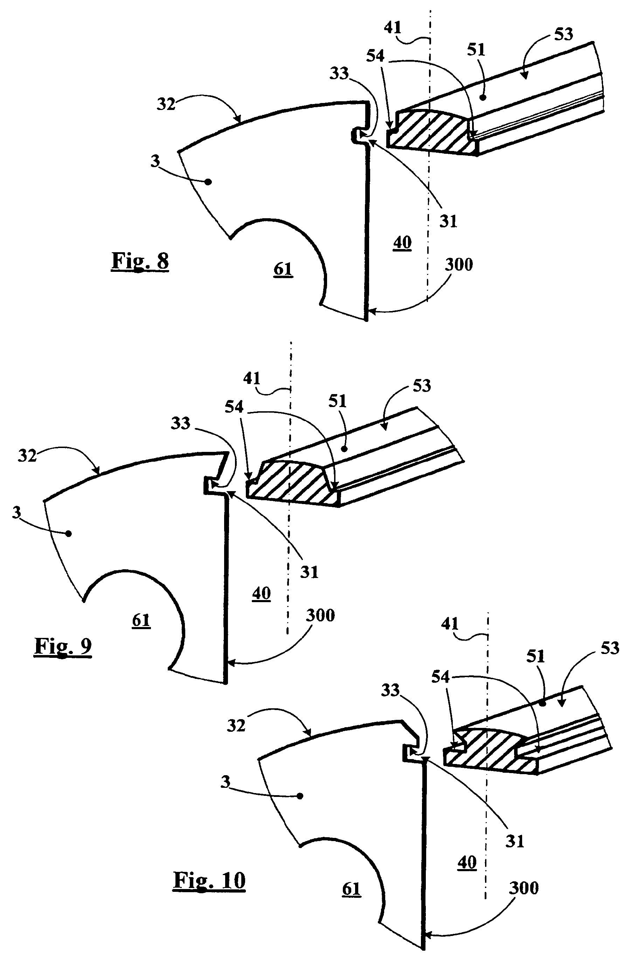

Le haut de la cale 53 peut même, comme représenté à la figure 8, être légèrement bombé (de préférence en adoptant le même rayon que la surface extérieure du rotor) afin de prolonger exactement la courbure du bord extérieur 32 des tôles. De cette manière, la rotation à vitesse élevée provoque encore moins de vibrations acoustiques (bruit).

Le profil illustré à la figure 9 est identique à celui de la figure 8 sauf en ce qui concerne la partie radiale du « T » dont la largeur n'est ici pas constante mais dégressive vers l'extérieur du rotor. La découpe de la tôle 3 a bien sûr une forme complémentaire.

La figure 10 montre encore un autre mode de réalisation dans lequel la partie radiale du « T », après une portion de largeur constante, s'évase vers l'extérieur du rotor.

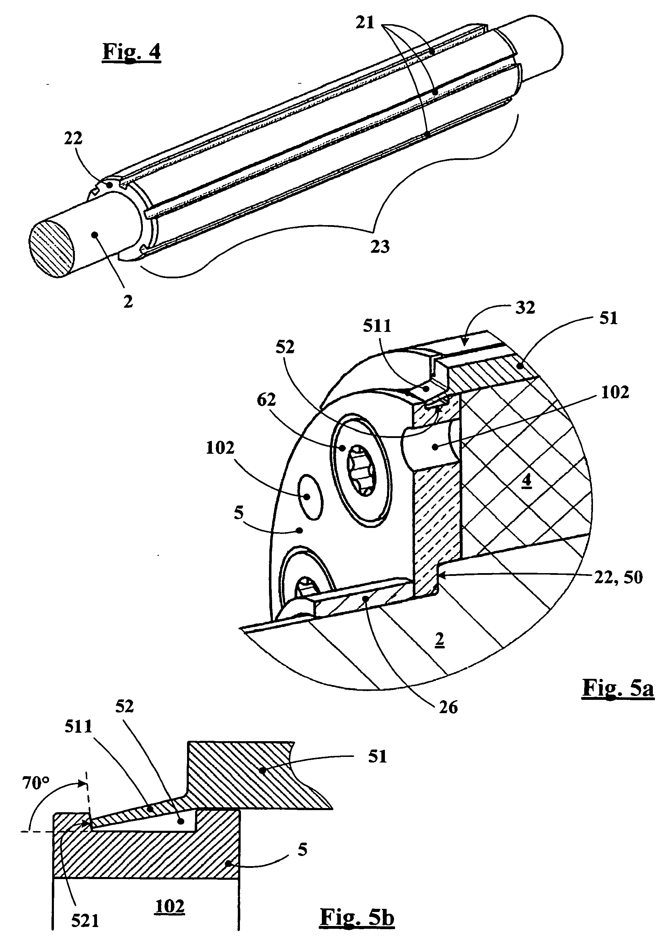

Comme détaillé aux figures 5a et 5b, les extrémités 511 des cales 51 s'étendent axialement de part et d'autre au-delà des pièces polaires dans des échancrures des flasques latéraux. De préférence, les extrémités 511 sont rabattues dans une gorge périphérique 52 des flasques latéraux afin d'y être immobilisées axialement. Cette disposition s'est en outre avérée favorable sur le plan des vibrations acoustiques (bruit) lorsque le rotor est en rotation à vitesse élevée. Pour permettre leur rabat dans la gorge périphérique 52, les extrémités 511 des cales sont de préférence affinées en ne comportant pas la partie radiale du profil en « T ». Les extrémités 511 se présentent alors sous la forme de languettes. De préférence encore la paroi extérieure 521 des gorges périphériques 52 est inclinée par rapport à la direction axiale d'un angle sensiblement inférieur à 90°, par exemple de l'ordre de 70° afin de créer un serrage axial des cales lorsqu'elle sont rabattues.

De préférence, les pièces polaires 30 comportent un tenon destiné à coopérer avec une rainure 21 de l'arbre 2. C'est cette liaison qui assure la transmission directe du couple depuis les pièces polaires vers l'arbre. Les rainures 21 sont de préférence à parois parallèles et coopèrent avec des tenons à faces d'appui également parallèles. Les pièces polaires étant de préférence constituées d'un empilage de tôles ferro-magnétiques 3, chaque tôle comporte une projection radiale 34 sensiblement rectangulaire qui constitue une partie du tenon. Naturellement, si seulement une partie des tôles d'une pièce polaire comporte cette projection, les contraintes seront concentrées sur ces tôles-là.

On voit aux figures 2 et 4 que l'arbre comporte de préférence autant de rainures que de pôles (ici au nombre de six) mais on comprend que selon les efforts en jeu, on pourrait se limiter à seulement 4, 3 ou même 2 rainures.

Le ou les épaulements 22 correspondent de préférence aux extrémités de la partie centrale rainurée 23 de l'arbre. Du fait de la présence du lamage 50 et de l'alésage 50', ces extrémités sont alors escamotées dans les flasques 5 et 5'. De cette manière, les tôles d'extrémités des empilages ne peuvent pas s'échapper de la partie centrale rainurée 23 de l'arbre. Ceci est particulièrement avantageux au cours de l'assemblage du rotor.

Des masselottes peuvent en outre être fixées aux flasques afin de parfaire l'équilibrage statique et dynamique du rotor.

Selon le mode de réalisation de l'invention des figures 1, 3 et 6, les masselottes d'équilibrage ont la forme de vis sans tête 101 que l'on positionne dans des perçages 102 filetés dans les flasques. De préférence, les perçages sont situés comme ici en regard des aimants 4 de sorte que les vis d'équilibrage peuvent venir serrer axialement les aimants. Chaque flasque comporte ainsi six perçages filetés 102 en plus des six passages 61 pour les six tirants 6.

Selon un deuxième mode de réalisation de l'invention, des masselottes d'équilibrage 103 peuvent être positionnées dans des évidements 104 dans les extrémités 60 des tirants. Les masselottes peuvent par exemple avoir la forme de vis sans tête adaptées à des filetages pratiqués dans les évidements des tirants ou même dans les têtes des vis des tirants 62.

On comprend qu'en jouant sur la position, la longueur et/ou le matériau choisi pour chaque masselotte d'équilibrage, on peut ajuster l'équilibre du rotor. Le nombre de filetages étant limité, il est souvent nécessaire de combiner l'effet de deux masselottes, chacune positionnée dans un perçage propre pour obtenir un équilibrage suffisamment fin. Pour obtenir un équilibrage dynamique satisfaisant, il est souvent utile de placer des masselottes sur chacun des deux flasques latéraux.

De préférence, les masselottes sont en outre immobilisées par collage dans leurs filetages afin de garantir le maintien de leur position axiale.

Les figures montrent en outre des tirants 6 et vis de tirants 62 spécifiques. Les têtes des tirants sont enfoncées dans l'un des flasques (ici sur la partie droite de la figure) et sont simplement arrêtées par un jonc 63 coopérant avec un épaulement 64 du flasque. Les vis de tirant 62 sont des vis dont les têtes fraisées sont escamotées dans l'épaisseur du flasque (gauche sur la figure).

Cette conception permet d'une part de réduire l'encombrement axial du rotor et d'autre part d'obtenir des flasques pratiquement lisses et donc peu générateurs de bruit.

L'ouverture centrale du flasque intermédiaire 7 du rotor de la figure 6 est circulaire, c'est à dire qu'elle ne permet pas de transmettre d'effort de rotation à l'arbre. Sur cet exemple, l'intégralité du couple est donc transmise à l'arbre par les projections 34 des tôles puisque tous les flasques (latéraux et intermédiaire) sont montés glissants en rotation sur l'arbre. La configuration représentée à la figure 1 dans laquelle les flasques intermédiaires comporte également des tenons peut être en revanche choisie pour faciliter encore la transmission du couple et l'alignement des passages 61 pour les tirants au cours de l'assemblage du rotor.

Le rotor selon l'invention supporte sans dommage des vitesses de rotations très élevées, très supérieures à 10 000 t/min, à savoir des vitesses de l'ordre de 20 000 t/min au moins. La grande résistance à la centrifugation du rotor selon l'invention permet de réduire encore l'entrefer, c'est à dire la distance radiale entre le rotor et le stator de la machine électrique, à environ 0.2 - 0.3 mm.

Les figures représentent un rotor hexa-polaire, c'est à dire comportant 3 paires de pôles mais l'homme du métier sait transposer les enseignements techniques de la présente demande à des rotors comprenant par exemple 2, 4 ou 5 paires de pôles au lieu de trois.

## Revendications

1. Rotor intérieur (1) à aimants enterrés pour machine électrique tournante, le rotor comprenant :
• un arbre (2),
• une pluralité de pièces polaires (30), réalisées en matière magnétique et entourant l'arbre, les pièces polaires délimitant entre elles des logements (40),
• une pluralité d'aimants permanents (4) disposés dans les logements (40),
• un flasque latéral (5, 5') axialement de chaque côté des pièces polaires le long de l'arbre (2), l'arbre traversant chaque flasque latéral,
• dans lequel les logements sont fermés radialement par des cales (51) coopérant avec des rainures longitudinales (31) des pièce polaires, les cales ayant un profil en « T » et se prolongeant axialement au-delà des pièces polaires,
ledit rotor étant **caractérisé en ce que** les faces d'appui radial (54) des cales dans les pièces polaires sont perpendiculaires au rayon central (41) des logements (40), et **en ce que** les extrémités (511) des cales (51) sont affinées et rabattues dans une gorge périphérique (52) de chaque flasque latéral (5, 5').

2. Rotor selon la revendication 1 dans lequel les cales sont sensiblement affleurantes à la surface du rotor (32).

3. Rotor selon la revendication 2 dans lequel la surface radialement extérieure (53) des cales est bombée afin de prolonger la courbure radialement extérieure de la surface (32) des pièces polaires (30).

4. Rotor selon l'une des revendications précédentes dans lequel les extrémités (511) des cales sont en contact avec les parois extérieures (521) des gorges périphériques (52) de chaque flasque latéral(5, 5').

5. Rotor selon l'une des revendications précédentes dans lequel les parois extérieures (521) des gorges périphériques (52) de chaque flasque latéral (5, 5') sont inclinées par rapport à la direction axiale d'un angle sensiblement inférieur à 90°.

6. Machine électrique tournante comprenant un rotor (1) selon l'une des revendications précédentes.

## Patentansprüche

1. Innenrotor (1) mit eingebetteten Magneten für eine rotierende elektrische Maschine, wobei der Rotor aufweist:
• eine Welle (2),
• mehrere Polstücke (30), die aus magnetischem Material hergestellt sind und die Welle umgeben, wobei die Polstücke zwischen sich Aufnahmen (40) begrenzen,
• mehrere Permanentmagnete (4), die in den Aufnahmen (40) angeordnet sind,
• ein seitliches Lagerschild (5, 5') axial auf jeder Seite der Polstücke entlang der Welle (2), wobei die Welle jedes seitliche Lagerschild durchquert,
• wobei die Aufnahmen radial durch Keilstücke (51) verschlossen sind, die mit Längsnuten (31) der Polstücke zusammenwirken, wobei die Keilstücke ein T-Profil aufweisen und sich axial über die Polstücke hinaus erstrecken,
wobei der Rotor **dadurch gekennzeichnet ist, dass** die Flächen zur radialen Abstützung (54) der Keilstücke in den Polstücken senkrecht zu dem mittleren Radius (41) der Aufnahmen (40) sind, und dadurch, dass die Enden (511) der Keilstücke (51) schmaler ausgebildet und in eine Umfangsrille (52) des jeweiligen Lagerschildes (5, 5') heruntergebogen sind.

2. Rotor nach Anspruch 1, wobei die Keilstücke im Wesentlichen mit der Oberfläche (32) des Rotors bündig sind.

3. Rotor nach Anspruch 2, wobei die radial äußere Fläche (53) der Keilstücke gewölbt ist, um die radial äußere Krümmung der Fläche (32) der Polstücke (30) zu verlängern.

4. Rotor nach einem der vorhergehenden Ansprüche, wobei sich die Enden (511) der Keilstücke in Kontakt mit den äußeren Wänden (521) der Umfangsrillen (52) des jeweiligen Lagerschilds (5, 5') befinden.

5. Rotor nach einem der vorhergehenden Ansprüche, wobei die äußeren Wände (521) der Umfangsrillen (52) des jeweiligen Lagerschilds (5, 5') bezüglich der axialen Richtung um einen Winkel geneigt sind, der im Wesentlichen kleiner als 90° ist.

6. Rotierende elektrische Maschine, die einen Rotor (1) nach einem der vorhergehenden Ansprüche aufweist.

## Claims

1. Buried-magnet internal rotor (1) for an electric rotating machine, the rotor comprising:
• a shaft (2),
• a plurality of polar parts (30) made of a magnetic material and surrounding the shaft, the polar parts delimiting housings (40) between them,
• a plurality of permanent magnets (4) placed in the housings (40),
• a lateral shroud (5, 5') axially on each side of the polar parts along the shaft (2), the shaft passing through each lateral shroud,
• in which the housings are closed radially by wedges (51) interacting with longitudinal splines (31) of the polar parts, the wedges having a T-shaped profile and extending axially beyond the polar parts,
the said rotor being **characterized in that** the radial bearing faces (54) of the wedges in the polar parts are perpendicular to the central radius (41) of the housings (40), and **in that** the ends (511) of the wedges are thinned and folded into a peripheral groove (52) of each lateral shroud (5, 5').

2. Rotor according to Claim 1, in which the wedges are substantially flush with the surface of the rotor (32).

3. Rotor according to Claim 2, in which the radially external surface (53) of the wedges is domed in order to extend the radially external curvature of the surface (32) of the polar parts (30).

4. Rotor according to one of the preceding claims, in which the ends (511) of the wedges are in contact with the external walls (521) of the peripheral grooves (52) of each lateral shroud (5, 5').

5. Rotor according to one of the preceding claims, in which the external walls (521) of the peripheral grooves (52) of each lateral shroud (5, 5') are inclined relative to the axial direction at an angle substantially less than 90°.

6. Electric rotating machine comprising a rotor (1) according to one of the preceding claims.
